# DEMANDE DE BREVET EUROPEEN

(11) **EP 2 881 287 A1**
(43) Date de publication de la demande: **10.06.2015**
(21) Numéro de dépôt: 14196044.3
(22) Date de dépôt: 03.12.2014
(51) Int. Cl.: B60R 13/08

(54) **Montage d'un écran de protection acoustique sur un moteur de véhicule automobile**

(30) Priorité: 04.12.2013 FR 1362105
(71) Demandeur: CENTRE D'ETUDE ET DE RECHERCHE POUR L'AUTOMOBILE (CERA), 51100 Reims (FR)
(72) Inventeur: Drezet, David, 51400 Prosnes (FR)
(74) Mandataire: Sayettat, Julien Christian

(57) **Abrégé**

L'invention concerne un montage (1) d'un écran (2) de protection acoustique sur un moteur de véhicule automobile, ledit montage comprenant :
• un réservoir (3) à fluide, ledit réservoir étant pourvu d'une ouverture (4) de remplissage, ladite ouverture étant destinée à être occultée par un bouchon (5),
• ledit écran qui est pourvu d'un orifice (6) d'accès à ladite ouverture,
ledit écran étant pourvu en périphérie dudit orifice d'une couronne (7) d'étanchéité s'appuyant en périphérie de ladite ouverture, de manière à réaliser une isolation du bruit dudit moteur émis vers ledit orifice.

## Description

L'invention concerne un montage d'un écran de protection acoustique sur un moteur de véhicule automobile et un écran pour un tel montage.

Il est connu de réaliser un montage d'un écran de protection acoustique sur un moteur de véhicule automobile, ledit montage comprenant :
- un réservoir à fluide - tel que de l'huile ou du liquide de refroidissement -, ledit réservoir étant pourvu d'une ouverture de remplissage, ladite ouverture étant destinée à être occultée par un bouchon,
- ledit écran qui est pourvu d'un orifice d'accès à ladite ouverture.

Avec un tel agencement, il se produit une émission du bruit issu du moteur à travers l'orifice de l'écran.

L'invention a pour but de pallier cet inconvénient.

A cet effet, et selon un premier aspect, l'invention propose un montage d'un écran de protection acoustique sur un moteur de véhicule automobile, ledit montage comprenant :
- un réservoir à fluide, ledit réservoir étant pourvu d'une ouverture de remplissage, ladite ouverture étant destinée à être occultée par un bouchon,
- ledit écran qui est pourvu d'un orifice d'accès à ladite ouverture,
ledit écran étant pourvu en périphérie dudit orifice d'une couronne d'étanchéité s'appuyant en périphérie de ladite ouverture, de manière à réaliser une isolation du bruit dudit moteur émis vers ledit orifice.

Dans cette description, les termes de positionnement dans l'espace (supérieur, vertical, horizontal, au-dessus...) sont pris en référence au montage disposé dans le véhicule.

On précise que, dans toute cette description, le montage d'un écran sur un moteur signifie que ledit écran est disposé au-dessus dudit moteur, à l'exclusion de toute autre localisation, puisque le remplissage d'un réservoir automobile se fait par versement du fluide dans ledit réservoir, ceci au travers de son ouverture de remplissage, ce qui conditionne les positions en hauteur respectives dudit écran et dudit moteur.

Avec l'agencement proposé, la couronne d'étanchéité forme barrière à la transmission du bruit dudit moteur au travers dudit orifice.

Selon un deuxième aspect, l'invention propose un écran pour un tel montage.

D'autres particularités et avantages de l'invention apparaîtront dans la description qui suit, faite en référence aux figures jointes, dans lesquelles :
- la figure 1 est une vue schématique en coupe verticale partielle d'un montage selon une première réalisation,
- la figure 2 est une vue schématique en coupe verticale partielle d'un montage selon une deuxième réalisation.

En référence aux figures, on décrit un montage 1 d'un écran 2 de protection acoustique sur un moteur de véhicule automobile, ledit montage comprenant :
- un réservoir 3 à fluide - tel que de l'huile ou du liquide de refroidissement -, ledit réservoir étant pourvu d'une ouverture 4 de remplissage, ladite ouverture étant destinée à être occultée par un bouchon 5,
- ledit écran qui est pourvu d'un orifice 6 d'accès à ladite ouverture,
ledit écran étant pourvu en périphérie dudit orifice d'une couronne 7 d'étanchéité s'appuyant en périphérie de ladite ouverture, de manière à réaliser une isolation du bruit dudit moteur émis vers ledit orifice.

Selon un mode de réalisation, la couronne 7 d'étanchéité présente une structure alvéolaire.

Une telle structure alvéolaire peut permettre de réaliser l'élasticité du matériau constitutif de la couronne 7.

En outre, une telle structure alvéolaire peut permettre, sous réserve que l'on dispose d'une porosité de surface, une absorption acoustique en sus de l'isolation réalisée par l'étanchéité apportée par la couronne 7, ce qui contribue à améliorer la protection acoustique.

Selon les réalisations représentées, l'écran 2 comprend une couche 8 de matériau élastiquement compressible, la couronne 7 d'étanchéité étant formée par une portion de ladite couche entourant l'orifice 6.

Le matériau élastiquement compressible est en particulier à base de mousse, notamment de polyuréthanne à haute densité, notamment comprise entre 0,25 et 0,40

De telles mousses présentent notamment une grande résistance à la chaleur et un caractère non abrasif vis-à-vis du moteur.

En variante, le matériau élastiquement compressible est à base de feutre, la mise en appui de la couronne 7 en périphérie de l'ouverture 4 créant l'étanchéité attendue.

En variante non représentée, la couronne 7 est sous forme d'un joint, par exemple en matériau élastomère, rapporté sur l'écran 2.

Selon les réalisations représentées, la couche 8 de mousse surmoule une coque 9 - ici supérieure - de rigidification, notamment à base de matériau thermoplastique injecté ou de feutre comprimé à chaud.

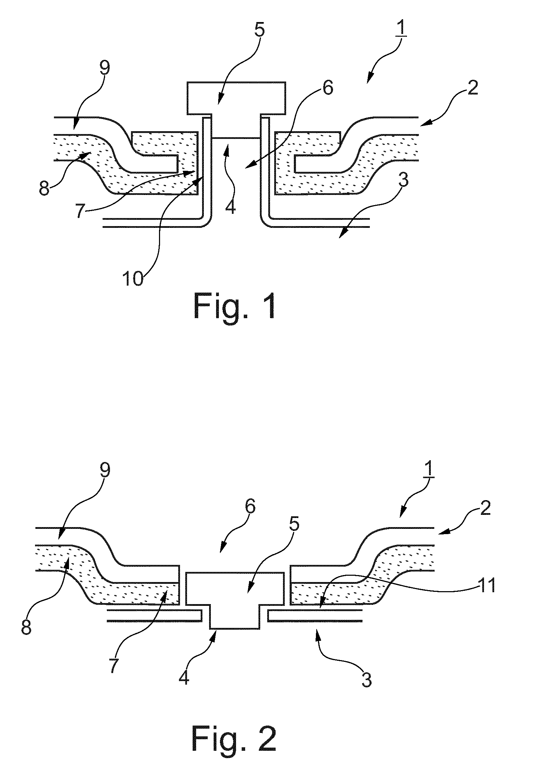

Selon la réalisation représentée en figure 1, l'ouverture 4 de remplissage est disposée en extrémité d'un goulot 10 de remplissage - ici sous forme générale de cylindre en saillie vers l'extérieur -, la couronne 7 d'étanchéité s'emboitant en contact serrant autour dudit goulot.

Selon la réalisation représentée en figure 2, la couronne 7 d'étanchéité s'appuie selon une direction verticale contre une zone d'appui 11 sensiblement horizontale entourant l'ouverture 4.

Selon un mode de réalisation, l'ouverture 4 est circulaire et présente un diamètre interne supérieur ou égal à 15 mm, un diamètre de l'ordre de 15 mm correspondant par exemple à l'ouverture d'un réservoir d'huile de pompe de direction.

Bien entendu, le montage 1 peut comprendre une pluralité de couronnes 7, correspondant à une pluralité d'orifices 6 et ouvertures 4 respectifs, relatifs à divers réservoirs 3 à fluide.

On décrit enfin un écran 2 de protection acoustique pour un tel montage 1 sur un moteur de véhicule automobile, ledit écran étant pourvu d'un orifice 6 d'accès à une ouverture 4 de remplissage d'un réservoir 3 à fluide, ledit écran étant pourvu en périphérie dudit orifice d'une couronne 7 d'étanchéité destinée à s'appuyer en périphérie de ladite ouverture, de manière à réaliser une isolation du bruit dudit moteur émis vers ledit orifice.

## Revendications

1. Montage (1) d'un écran (2) de protection acoustique sur un moteur de véhicule automobile, ledit montage comprenant :
• un réservoir (3) à fluide, ledit réservoir étant pourvu d'une ouverture (4) de remplissage, ladite ouverture étant destinée à être occultée par un bouchon (5),
• ledit écran qui est pourvu d'un orifice (6) d'accès à ladite ouverture,
ledit montage étant **caractérisé en ce que** ledit écran est pourvu en périphérie dudit orifice d'une couronne (7) d'étanchéité s'appuyant en périphérie de ladite ouverture, de manière à réaliser une isolation du bruit dudit moteur émis vers ledit orifice.

2. Montage selon la revendication 1, **caractérisé en ce que** la couronne (7) d'étanchéité présente une structure alvéolaire.

3. Montage selon la revendication 2, **caractérisé en ce que** l'écran (2) comprend une couche (8) de matériau élastiquement compressible, la couronne (7) d'étanchéité étant formée par une portion de ladite couche entourant l'orifice (6).

4. Montage selon la revendication 3, **caractérisé en ce que** le matériau élastiquement compressible est à base de mousse, notamment de polyuréthanne à haute densité.

5. Montage selon la revendication 4, **caractérisé en ce que** la couche (8) de mousse surmoule une coque (9) de rigidification.

6. Montage selon l'une quelconque des revendications 1 à 5, **caractérisé en ce que** l'ouverture (4) de remplissage est disposée en extrémité d'un goulot (10) de remplissage, la couronne (7) d'étanchéité s'emboitant en contact serrant autour dudit goulot.

7. Montage selon l'une quelconque des revendications 1 à 5, **caractérisé en ce que** la couronne (7) d'étanchéité s'appuie selon une direction verticale contre une zone d'appui (11) sensiblement horizontale entourant l'ouverture (4).

8. Montage selon l'une quelconque des revendications 1 à 7, **caractérisé en ce que** l'ouverture (4) est circulaire et présente un diamètre interne supérieur ou égal à 15 mm.

9. Ecran (2) de protection acoustique pour un montage sur un moteur de véhicule automobile selon l'une quelconque des revendications 1 à 8, ledit écran étant pourvu d'un orifice (6) d'accès à une ouverture (4) de remplissage d'un réservoir (3) à fluide, ledit écran étant **caractérisé en ce qu'**il est pourvu en périphérie dudit orifice d'une couronne (7) d'étanchéité destinée à s'appuyer en périphérie de ladite ouverture, de manière à réaliser une isolation du bruit dudit moteur émis vers ledit orifice.
